(19) **Europäisches Patentamt / European Patent Office / Office européen des brevets**

(11) **EP 4 215 591 A1**

(12) **EUROPEAN PATENT APPLICATION**
published in accordance with Art. 153(4) EPC

(43) Date of publication:
26.07.2023 Bulletin 2023/30

(21) Application number: 21869364.6

(22) Date of filing: 14.09.2021

(51) International Patent Classification (IPC):
*C09D 5/02* (2006.01)   *C09D 109/06* (2006.01)
*C09D 133/00* (2006.01)   *C09D 201/00* (2006.01)
*H01M 4/62* (2006.01)   *C09D 7/40* (2018.01)
*C09D 7/43* (2018.01)   *H01M 50/409* (2021.01)

(52) Cooperative Patent Classification (CPC):
C09D 5/02; C09D 7/40; C09D 7/43; C09D 109/06;
C09D 133/00; C09D 201/00; H01M 4/62;
H01M 50/409; Y02E 60/10

(86) International application number:
PCT/JP2021/033782

(87) International publication number:
WO 2022/059678 (24.03.2022 Gazette 2022/12)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 17.09.2020 JP 2020156620

(71) Applicant: **Resonac Corporation**
**Tokyo 105-8518 (JP)**

(72) Inventors:
• **KONISHI, Jun**
**Tokyo 105-8518 (JP)**
• **SUGAWARA, Atsushi**
**Tokyo 105-8518 (JP)**

(74) Representative: **Strehl Schübel-Hopf & Partner**
**Maximilianstrasse 54**
**80538 München (DE)**

(54) **COATING FLUID COMPOSITION, SUBSTRATE WITH COATING FILM, SEPARATOR, SECONDARY BATTERY, AND ELECTRODE MATERIAL**

(57)    Provided is a composition that can form a coating film having excellent surface smoothness and high heat deformation resistance in a coating liquid for a paint mainly containing a polymer, an ink, an adhesive, and an anode, a cathode, or a separator of a lithium ion battery, for example. A coating liquid composition includes a filler, a solvent, a dispersant, and a thickener. When the coating liquid composition is applied to a substrate to form a coating film having a thickness of 0.5 to 20 pm, the coating film has a shrinkage rate of 15.0% or less after heating at 170°C for 15 minutes.

EP 4 215 591 A1

**Description**

Technical Field

The present invention relates to a coating liquid composition including a filler, a solvent, a dispersant, and a thickener, a coating film containing the coating liquid composition of the present invention, and a substrate with a coating film containing the same, the coating film being less likely to deform even when heat is applied to a coating liquid for a paint mainly containing a polymer, an ink, an adhesive, an anode, a cathode, or a separator of a lithium-ion secondary battery, for example.

Background Art

Coating and printing techniques using compositions are widely used in industrial fields in general from the viewpoints of environment and safety as well as efficiency.
However, a factor contributing to the formation of a coating film with a good appearance maintained has not been understood.
In Patent Literature 1, a suspension of fibrous cellulose diluted with ion exchanged water has a specific TI value to enhance the dispersibility and ease of application of a battery separator coating liquid. Meanwhile, this literature does not disclose a TI value in a state of containing a composition other than fibrous cellulose and ion exchanged water nor describe or suggest a factor contributing to heat resistance.
Patent Literature 2 discloses a coating liquid having excellent coating properties and capable of forming a uniform coating film, but the content of a water-soluble component in the coating liquid is 5% by mass or less, and thus the coating liquid is in a state in which the solid content is large.
None of these Patent Literatures necessarily suggests anything from the viewpoint of heat resistance and deformability. Particularly, in the case where a battery such as a lithium-ion secondary battery is mounted on, for example, an electric vehicle, if the temperature exceeds the crystalline melting point of a porous polyolefin film contained in a coating film in the event of abnormal heat generation, the pore diameter is generally reduced to interrupt lithium ions, thereby suppressing further heat generation. However, in the case where the temperature further increases, a temperature at which the separator film melts and breaks is referred to as a meltdown temperature. When the temperature exceeds this meltdown temperature, it is known that the polyolefin film shrinks, leading to a short circuit between the anode and the cathode which may cause ignition.

Citation List

Patent Literature

Patent Literature 1: WO2018/070473
Patent Literature 2: Japanese Patent No. 5829557

Summary of Invention

Technical Problem

Although voids generated on the surface of the coating film during heating affect heat resistance and deformability, it has been completely unclear what characteristics should be provided to the coating film or the coating liquid in order to keep the coating film good during heating.

Solution to Problem

As a result of intensive study under such a situation, the present inventors have found that when a coating film is formed from a coating liquid under predetermined conditions, a coating film having a good surface can be formed without voids on the surface by setting a shrinkage rate of the coating film to a predetermined range and sufficiently used in the above-described applications, and thus the present invention has been completed.
In other words, the configuration of the present invention is as follows.

[1] A coating liquid composition including a filler, a solvent, a dispersant, a thickener, and a binder, wherein when the coating liquid composition is applied to a substrate to form a coating film having a thickness of 0.5 to 20 pm, the coating film has a shrinkage rate of 15.0% or less after heating at 170°C for 15 minutes.

[2] The coating liquid composition according to [1], wherein a content of the filler is 20% by mass or more and 70% by mass or less based on the composition.

[3] The coating liquid composition according to [1] or [2], wherein the thickener is at least one selected from poly-N-vinylcarboxylic acid amide, carboxymethylcellulose, and a salt thereof.

[4] The coating liquid composition according to [3], wherein the thickener includes the poly-N-vinylcarboxylic acid amide, the carboxymethylcellulose, or a salt thereof.

[5] The coating liquid composition according to [3] or [4], wherein the poly-N-vinylcarboxylic acid amide is poly-N-vinylacetamide.

[6] The coating liquid composition according to [5], including the salt of carboxymethylcellulose as a sodium salt, wherein a mass ratio of the poly-N-vinylacetamide to the sodium salt of carboxymethylcellulose (poly-N-vinylacetamide/sodium salt of carboxymethylcellulose) is 0.0001 or more in terms of solid content.

[7] The coating liquid composition according to [1] to [6], wherein the solvent is water.

[8] The coating liquid composition according to [1] to [7], wherein the binder is an emulsion selected from an acrylic emulsion and a styrene-butadiene polymer emulsion.

[9] The coating liquid composition according to [1] to [8], wherein an amount of the binder is 1 part by mass or more and 30 parts by mass or less with respect to 100 parts by mass of the filler.

[10] A substrate with a coating film, including a coating film formed from the coating liquid composition according to [1] to [9] and a substrate.

[11] The substrate with a coating film according to [10], wherein the substrate is a polyolefin film.

[12] The substrate with a coating film according to [11], wherein the polyolefin film is at least one selected from a polyethylene film and a polypropylene film.

[13] The substrate with a coating film according to [12], wherein the substrate is a three-layer laminated film of polypropylene, polyethylene, and polypropylene.

[14] A separator including the substrate with a coating film according to [13].

[15] A secondary battery using the separator according to [14] .

[16] An electrode material including a coating film formed from the coating liquid composition according to [1] to [9] on a surface of a polypropylene substrate.

Advantageous Effects of Invention

The coating liquid composition of the present invention can form a coating film having a good appearance and has excellent heat deformation resistance, and therefore can be used as an electrode material that is less likely to change even in a high-temperature environment of an automobile, for example. If such a technique is adopted for the formation of, for example, an electrode or a separator of a secondary battery, particularly a lithium-ion secondary battery, the safety of the secondary battery at the time of heat generation can be improved. In addition, the smooth surface allows for a high filler loading with respect to the volume and a thin film. The contact area between the separator and the electrode becomes larger with better lamination, resulting in excellent long-term durability.

Description of Embodiments

Hereinafter, embodiments of the present invention will be described.

[Composition]

The coating liquid composition of the present embodiment includes a filler, a solvent, a dispersant, a thickener, and a binder.

When such a coating liquid composition is applied to a substrate and dried to form a coating film having a thickness of 0.5 to 20 pm, the coating film has a shrinkage rate of 15.0% or less after heating at 170°C for 15 minutes. The substrate is not limited, and examples thereof include a polypropylene film described below.

The shrinkage rate of the coating film at 170°C at 15 minutes is 15.0% or less, preferably 13.0% or less, and more preferably 8.0% or less. The shrinkage rate of the coating film at 170°C at 15 minutes is preferably 0.01% or more, more preferably 1.5% or more, and even more preferably 6.0% or more. The shrinkage rate is measured by a method described in Examples. The shrinkage rate in this range is preferred because the coating film has excellent durability.

[Filler]

The filler may be an inorganic filler or an organic filler but is preferably an inorganic filler such as alumina, boehmite, talc, kaolin calcium carbonate, calcium phosphate, magnesium oxide, amorphous silica, a crystalline glass filler, titanium dioxide, a silica-alumina composite oxide particle, barium sulfate, calcium fluoride, lithium fluoride, zeolite, molybdenum sulfide, and mica. Of these, alumina and boehmite are more preferred. Alumina and boehmite are preferred because each has a good affinity with a thickener and a binder when formed into a coating film.

The shape of the filler is not particularly limited and may be spherical, polyhedral, plate, scale, columnar, tubular, or even fibrous.

In the case where the filler has a shape other than a spherical or regular polyhedral shape, the aspect ratio of the filler is preferably 2 or more, more preferably 5 or more, and even more preferably 10 or more. If the aspect ratio of the filler is 2 or more, an effect of making it difficult for the lithium dendrite to penetrate the separator is exhibited by a laminating effect of the filler when the lithium dendrite grows. Note that the aspect ratio of the filler is preferably 100 or less.

It is desirable that the long diameter of the filler be preferably in the range of 0.1 to 1000 $\mu$m, and more preferably in the range of 1 to 100 um.

It is desirable that the short diameter of the filler be preferably in the range of 0.01 to 100 $\mu$m, and more preferably in the range of 0.1 to 10 $\mu$m.

It is desirable that the 50% particle diameter $D_{50}$ of the filler in volume-based cumulative particle size distribution be preferably in the range of 0.01 to 1000 $\mu$m, and more preferably in the range of 0.1 to 100 $\mu$m.

[Thickener]

As the thickener, a water-soluble polymer is used, and preferred examples of the thickener include poly-N-vinylcarboxylic acid amide; poly-N-vinyl pyrrolidone; sodium salts of carboxymethylcellulose; polyacrylamide; polyvinyl alcohol; polysaccharides such as carrageenan, xanthan gum, guar gum, and pectin; cellulosic polymers such as carboxymethylcellulose, hydroxymethylcellulose, hydroxyethylcellulose, methyl ethyl hydroxycellulose, methylcellulose, and hydroxypropyl cellulose; and ammonium salts and alkali metal salts of these cellulosic polymers.

Specific examples of monomers constituting the poly-N-vinylcarboxylic acid amide include N-vinylformamide, N-vinylacetamide, N-vinyl propionamide, N-vinylbenzamide, N-vinyl-N-methylformamide, N-vinyl-N-ethylformamide, N-vinyl-N-methylacetamide, N-vinyl-N-ethylacetamide, and N-vinyl pyrrolidone. Of these, N-vinylacetamide is particularly preferred due to its coating properties and affinity for a solvent containing water.

The poly-N-vinylcarboxylic acid amide may be a homopolymer or a copolymer. In the case of copolymerization, in addition to N-vinylcarboxylic acid amide, it is also possible to copolymerize acrylonitrile, vinyl acetate, acrylic acid, an acrylate, and salts of itaconic acid, maleic acid, crotonic acid, (meth)acrylic acid, and other acids. However, copolymerization is not particularly limited.

As the thickener, at least one of the poly-N-vinylacetamide and a sodium salt of carboxymethylcellulose is preferably used, and a combination of poly-N-vinylacetamide and the sodium salt of carboxymethylcellulose is more preferably used. The use of such a thickener makes it possible to form a coating film having small thermal deformation and to obtain a coating film having an excellent coating surface appearance.

The viscosity of the thickener is preferably 75 mPa·s or more, and more preferably 100 mPa·s or more. The viscosity of the thickener is preferably 100000 mPa·s or less and more preferably 50000 mPa·s or less. The viscosity is in this range is preferred because coating can be easily performed.

The viscosity is measured in terms of actual viscosity (without adjusting the solution concentration) by a method for measuring a solution viscosity described in Examples.

In the case of using the poly-N-vinylacetamide or sodium salt of carboxymethylcellulose, the mass ratio (poly-N-vinylacetamide/sodium salt of carboxymethylcellulose) is preferably 0.001 or more, more preferably 0.01 or more, and even more preferably 0.1 or more in terms of solid content. The mass ratio (poly-N-vinylacetamide/sodium salt of carboxymethylcellulose) is preferably 10.0 or less and more preferably 1.0 or less in terms of solid content. If the mass ratio is in this range, both components in the coating liquid composition have good dispersibility and are preferred.

[Binder]

Suitable binders are emulsions in which resins such as styrene-butadiene resin and acrylic resin are dispersed in water and various rubber-based latexes. Among them, an emulsion of a cross-linking type acrylic resin is preferred. The acrylic binder may be either a homopolymer or a copolymer. The emulsion may be used as it is or after being solidified.

The amount of the binder is preferably 1 part by mass or more, and more preferably 2 parts by mass or more with respect to 100 parts by mass of the filler. The amount of the binder is preferably 30 parts by mass or less, and more preferably 7 parts by mass or less, with respect to 100 parts by mass of the filler. When the binder is contained in this range, the dispersibility of the filler can be enhanced.

[Solvent]

The solvent is not particularly limited as long as it can disperse or dissolve the above-described components and does not react with them, but in view of drying properties, an easily volatile solvent is used. Specifically, water or a polar solvent compatible with water is used, and a solvent containing 50% by mass or more of water is preferred, and water alone is more preferred. Water is particularly preferably ion-exchanged water. Examples of solvents other than water include alcohols such as methanol, ethanol, and isopropanol.

[Dispersant]

The coating liquid composition of the present invention may include a dispersant, if necessary. The dispersant is not particularly limited as long as the filler is dispersed in the solvent but is preferably dodecylbenzenesulfonic acid, polyvinyl alcohol, polyacrylamide, polymethacrylic acid, a higher alcohol ethylene oxide adduct, a polypropylene glycol ethylene oxide adduct, or a fatty acid ester of sorbitol or sorbitan. The salt is not particularly limited but is preferably an ammonium salt containing no metal.
The amount of the dispersant is preferably 0.1 parts by mass or more, and more preferably 0.5 parts by mass or more, with respect to 100 parts by mass of the filler. The amount of the dispersant is preferably 2 parts by mass or less, and more preferably 1.5 parts by mass or less, with respect to 100 parts by mass of the filler. When the dispersant is contained in this range, the dispersibility of the filler can be enhanced.

[Composition and Preparation Method of Coating Liquid Composition]

In the coating liquid composition of the present embodiment, the mass of the filler in the composition is preferably in the range of 20 to 70% by mass, more preferably 25 to 60% by mass, and even more preferably 40 to 50% by mass based on the mass of the composition. When the filler is contained in such an amount, a coating film having small deformation due to heat can be formed.
The mass ratio of the filler to the thickener (filler/thickener) is preferably 0.1 to 200, more preferably 30 to 150, and even more preferably 60 to 100. With this ratio, a coating film having a predetermined heat deformation resistance can be formed.
The solvent such as water corresponds to the remainder of the aforementioned components in the composition, and usually, the amount of the filler is preferably 0.1 to 200 parts by mass and more preferably 40 to 100 parts by mass, with respect to 100 parts by mass of the solvent. When the solvent is in this range, good fluidity of the coating liquid composition can be obtained, the coating property is high, and the smoothness of the resulting coating film can be improved.
A method of mixing each component of the coating liquid composition is not particularly limited either, but in order to obtain a more uniform mixed state, it is preferable to disperse at least a binder, a thickener, and a dispersant in a solvent before adding and mixing a filler. It is more preferable to sequentially add the filler to a solution in which at least a binder, a thickener, and a dispersant have been dissolved, while continuously stirring the solution, and then stir, mix, and homogenize the mixture. As a result, an ideal mixed state can be obtained.
In another aspect, it is also preferable to add the dispersant to the filler and the solvent under stirring, crush the secondary aggregation, then add the binder and the thickener, and uniformly mix the components while suppressing reaggregation.

[Application]

The coating liquid composition of the present embodiment can be used in various coating liquids for a paint, an ink, an adhesive, and an anode, a cathode, or a separator of a lithium ion battery, for example, depending on the type of the filler to be blended.
The coating liquid composition can be used as a coating liquid as it is or can be used as a coating liquid by appropriately adjusting the concentration and the viscosity with, for example, a solvent, if necessary.
For example, a coating film is produced by coating the surface of a substrate with the coating liquid composition or the coating liquid and drying it. A coating film composed of the coating liquid composition can be provided on the surface of the substrate (also referred to as a substrate with a coating film) to form an electrode material.
Since the coating liquid composition of the present embodiment includes a thickener, it is also possible to provide a coating and drying method in which the drying time is significantly shortened.
The method of applying the coating liquid composition to the substrate is not particularly limited, but the coating liquid composition can be applied in a continuous manner using a roll-to-roll pattern coating device in addition to spray coating, roll coating, bar coating, gravure coating, die coating, knife coating, ink jet coating, brush coating, immersion coating, for example.

Further, the coating liquid composition may contain known materials to be added to the paint in addition to the above, for example, a thixotropic agent, a surface conditioner, a defoaming agent, a leveling agent, a pigment, a dye, an adhesive component, an adhesive component, and a tackifier.

As the substrate, a film, a nonwoven fabric, a porous body, a plate-like body, or the like can be used without particular limitation.

Examples of materials constituting the substrate include organic resin materials such as ethylene alone or copolymers of ethylene with other $\alpha$-olefins, homopolypropylene, copolymers of propylene with other olefins, polyethylene terephthalate, polyethylene naphthalate, polyamide ether ketone, polyimide, polyamide, polyphenylene sulfone, polyphenylene ether, polyethylene, polyether sulfone, polyether ether ketone, polybenzimidazole, polyether imide, polyamide imide, poly(p-phenylene-2, 6-benzobisoxazole), fluorine resin, and epoxy resin; metallic materials such as aluminum, copper, silver, and iron; and inorganic materials such as glass (silicon oxide), alumina, magnesia, aluminum nitride, aluminum carbide, silicon nitride, and barium titanate. The substrate may be used alone or in combination of two or more.

Among them, the substrate is preferably polyolefin, more preferably at least one selected from polyethylene and polypropylene, and most preferably a three-layer laminate in which polypropylene, polyethylene, and polypropylene are laminated in this order. In the case of using a porous substrate made of such a material, it can be used as a separator for a secondary battery.

When the porous substrate is a polyolefin film, the polyolefin film is not particularly limited whether it is produced by a wet method or a dry method. In the case of a porous substrate composed of a three-layer laminate, it is preferable that all three layers are produced by a dry method. A material having such a configuration is free from curling and has, for example, good heat resistance and mechanical strength.

The dry method is a dry process in which a solvent is not used at the time of production, and examples thereof include melt molding and injection molding of a molten resin with a T-die. The outer layer and the inner layer may be formed by either a dry method or a wet method, and the wet method is a method in which a film is formed using a resin to which an additive is added and mixed, and then the additive is extracted with a solvent.

The thickness of the substrate as a whole is appropriately selected in terms of, for example, mechanical strength, performance, and miniaturization according to the purpose, and is preferably 7.0 um or more. The upper limit thereof is preferably 50 um or less. When the thickness is in this range, the substrate may have high strength and high ionic conductivity.

In the case of a porous substrate, the air permeability thereof is preferably 80 s/100 cc or more. The upper limit thereof is preferably 700 s/100 cc or less. When having air permeability in this range, the porous substrate is less likely to have a short circuit and has high ion mobility.

The porosity of the porous substrate is preferably 30% or more, and the upper limit thereof is preferably 70% or less. When the porosity is in this range, the substrate may have high mechanical strength, no short circuit, and high ion mobility.

The maximum pore diameter of the porous substrate is preferably 0.05 um or more, and the upper limit thereof is preferably 2 um or less. When the pore diameter is in this range, the porous substrate becomes large in the case of being used as a separator due to its high ion mobility and low resistance.

The drying method is not particularly limited, and examples thereof include spin drying, vacuum drying, hot air drying, and infrared drying. The drying time is not particularly limited either.

In the case of forming a separator, the separator can be formed by, for example, a method of coating the coating liquid composition onto the surface of the substrate.

In the case of forming an electrode, a battery electrode can be formed by a method involving mixing the coating liquid composition with an anode active material or a cathode active material and then coating the mixture on the surface of the substrate or the surface of a current collector thereof, or by applying a mixture of the coating liquid composition with an anode active material or a cathode active material or both to an electrode foil or by forming the composition into a thin film and then inserting the composition into the surface of the current collector of the anode or the cathode or both.

The members constituting a lithium-ion secondary battery can be broadly divided into a positive electrode, a negative electrode, a separator, and an electrolyte. The positive electrode and the negative electrode each contain an active material that performs an oxidation/reduction reaction to send and receive electrons. The positive electrode and the negative electrode can be used in the form of an electrode group having a laminated structure in which the electrodes are laminated with a battery separator interposed therebetween, or an electrode group having a wound structure in which the electrode group is further wound.

The anode is not particularly limited as long as it is an anode used in a conventionally known lithium-ion secondary battery. The anode contains an active material capable of storing and releasing $Li^+$ ions.

The cathode is not particularly limited as long as it is a cathode used in a conventionally known lithium-ion secondary battery. The cathode contains an active material capable of storing and releasing $Li^+$ ions.

The anode and the cathode can be used in the form of an electrode group having a laminated structure in which the electrodes are laminated with a separator interposed therebetween, or an electrode group having a wound structure in which the electrode group is further wound. As the electrolyte, a solution of a lithium salt dissolved in an organic solvent is used. The lithium salt is not particularly limited as long as it dissociates in the solvent to form $Li^+$ ions and does not cause side reactions such as decomposition in the voltage range to be used for a battery. The organic solvent is not particularly limited as long as it dissolves the lithium salt and does not cause side reactions such as decomposition in the voltage range to be used for a battery.

Each member prepared using the coating liquid composition of the present invention is suitably used for each member of the aforementioned battery.

Lithium ion batteries are used for various conventionally known applications in addition to power supply applications for mobile devices such as mobile phones and notebook personal computers, and various devices such as electric vehicles, hybrid vehicles, electric motorcycles, power-assisted bicycles, power tools, and shavers.

Examples

Hereinafter, the present invention will be described with reference to Examples, but the present invention is not limited to these examples at all.

[Materials Used]

·Filler

Alumina, AL160SG-3 manufactured by Showa Denko K.K., $D_{50}$: 0.52 um, aspect ratio of 1.4
Scaly boehmite: Cerasur (manufactured by KAWAI LIME INDUSTRY CO., LTD.) aspect ratio of 20 to 40

·Binder
Acrylic emulsion: POLYSOL (R) LB-350 (manufactured by Showa Denko K.K.)
·Thickener

Poly-N-vinylacetamide PNVA (R)-1: GE191-043 (manufactured by Showa Denko K.K.), actual viscosity of 5000 mPa·s, solid content of 4% by mass
Poly-N-vinylacetamide PNVA (R)-2: GE191-104 (manufactured by Showa Denko K.K.), actual viscosity of 18000 mPa·s, solid content of 10% by mass
Poly-N-vinylacetamide PNVA (R)-3: GE191-107 (manufactured by Showa Denko K.K.), actual viscosity of 50 mPa·s, solid content of 10% by mass
Poly-N-vinylacetamide PNVA (R)-4 (copolymer of N-vinylacetamide and sodium acrylate at a copolymerization ratio = 90:10 (molar ratio)): GE167-103 (manufactured by Showa Denko K.K.), actual viscosity of 5000 mPa·s, solid content of 10% by mass
Carboxymethylcellulose CMC-Na: MAC350HC (manufactured by Nippon Paper Industries Co., Ltd.), solid content of 2% by mass
Polyvinylpyrrolidone: PVP K-90 (manufactured by Tokyo Chemical Industry Co., Ltd.)

·Dispersant

Ammonium polyacrylate: Aron (R) A-30 SL (manufactured by Toagosei Co., Ltd.)
Sodium dodecylbenzenesulfonate: NEOPELEX (R) G-65 (manufactured by Kao Corporation)

[Examples 1 to 10 and Comparative Examples 1 to 7]

The specified amounts listed in Table 1 of ion-exchanged water, dispersant, binder, thickener, and filler were weighed in order in a 200 ml resin container and charged into a planetary centrifugal mixer (ARE-250, manufactured by THINKY CORPORATION). The mixer was tightly stoppered and mixed under the conditions of mixing for 60 seconds and deforming for 60 seconds to obtain a uniform coating liquid composition.

The dispersant, binder, and thickener are expressed in parts by mass of the solid content.

[Table 1]

(parts by mass)

| | | | Example 1 | Example 2 | Example 3 | Example 4 | Example 5 | Example 6 | Example 7 | Example 8 |
|---|---|---|---|---|---|---|---|---|---|---|
| Filler | Alumina | AL160-SG-3 | 100 | 100 | 100 | 100 | 100 | | | |
| | Scaly boehmite | Cerasur | | | | | | 100 | 100 | 100 |
| Solvent | Water | Ion exchanged water | 100 | 100 | 100 | 100 | 100 | 120 | 120 | 120 |
| Dispersant | Ammonium polyacrylate | Aron A-30 SL | 1 | 1 | 1 | 1 | 1 | 1 | 1 | 1 |
| | Sodium dodecylbenzenesulfonate | NEOPELEX G-65 | 0.2 | 0.2 | 0.2 | 0.2 | 0.2 | 0.2 | 0.2 | 0.2 |
| Binder | Emulsion | LB-350 | 3 | 3 | 3 | 3 | 3 | 3 | 3 | 3 |
| Thickener | PNVA-1 | GE191-043 | 0.3 | 0.5 | 1 | 0.1 | 0.3 | 0.1 | 0.3 | 1 |
| | PNVA-2 | GE191-104 | | | | | | | | |
| | PNVA-3 | GE191-107 | | | | | | | | |
| | PNVA-4 Copolymer | GE167-103 | | | | | | | | |
| | CMC-Na | MAC350HC | 1 | 1 | | | 0.9 | 0.7 | 0.9 | 0.7 |
| | PVP | K-90 | | | | | | | | |

Table 1 (continued)

(parts by mass)

| | | | Example 9 | Example 10 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|
| Filler | Alumina | AL160-SG-3 | | | 100 | 100 | 100 | | | | |
| | Scaly boehmite | Cerasur | 100 | 100 | | | | 100 | 100 | 100 | 100 |
| Solvent | Water | Ion exchanged water | 120 | 120 | 100 | 100 | 100 | 120 | 120 | 120 | 120 |
| Dispersa | Ammonium polyacrylate | Aron A-30 SL | 1 | 1 | 1 | 1 | 1 | 1 | 1 | 1 | 1 |
| | Sodium dodecylbenzenesulfonate | NEOPELEX G-65 | 0.2 | 0.2 | 0.2 | 0.2 | 0.2 | 0.2 | 0.2 | 0.2 | 0.2 |
| Binder | Emulsion | LB-350 | 3 | 3 | 3 | 3 | 3 | 3 | 3 | 3 | 3 |
| Thickener | PNVA-1 | GE191-043 | | | | 0.1 | | | | | |
| | PNVA-2 | GE191-104 | 0.3 | | | | | | | | |
| | PNVA-3 | GE191-107 | | | | | | | 0.3 | | |
| | PNVA-4 Copolymer | GE167-103 | | 0.3 | | | | | | | |
| | CMC-Na | MAC350HC | 0.7 | 0.7 | 1 | 1 | 1 | 1 | 0.7 | | 1 |
| | PVP | K-90 | | | | | 0.5 | | | 1 | 0.5 |

The obtained compositions were each evaluated as follows.

<Coating test method>

On a polypropylene sheet having a thickness of 16 um, 3.5 g of the obtained coating liquid composition was fixed with masking tape, and then placed on a coating stand of a coating machine on which the polypropylene sheet was fixed with double-sided tape (15 cm × 30 cm: 0.1 um in thickness), and coated using a bar coater (50 mm in width × 5 um in thickness, manufactured by YOSHIMITSU SEIKI) in an automatic coating machine (Pi-1210, manufactured by TESTER SANGYO CO., LTD.) at a speed of 200 mm/s.

Thereafter, the coated polypropylene sheet was dried in a hot air dryer at a temperature of 40°C for 1 hour to prepare a coating film.

<Solution viscosity>

The viscosity of the coating liquid composition at 23°C was evaluated on a Brookfield DV2T viscometer spindle SC4-28 water-jacketed small sample adapter at 50 rpm.

<TI value>

The TI value (thixotropy index) is calculated by the following equation.
TI value = viscosity at low shear rate of 0.1/s (Pa·s)/viscosity at high shear rate of 10000/s (Pa·s)
Measurements were made using an AntonParr rotational viscometer (rheometer). Specifically, the viscosity at 23°C was measured from a shear rate of 0.1 sec$^{-1}$ to 10000 sec$^{-1}$ over 315 seconds while increasing the rate, and continuously from 10000 sec$^{-1}$ to 0.1 sec$^{-1}$ over 315 seconds while decreasing the rate. The viscosity at each shear rate was defined as the value measured when the shear rate was lowered, and the ratio of the viscosities at the shear rates listed in Table 2 was determined.

<Coating film thickness>

Using a constant pressured thickness measurement instrument PF-11J manufactured by TECLOCK Co., Ltd., measurements were made at three points in total at the center of the coating film and two points 10 cm above and below the center according to JISK6400-1-2004 to calculate a weighted average thereof.

<Coating surface appearance>

The surface appearance of the coating film was evaluated based on the following criteria.

O: No voids were observed on the coated surface.
Δ: No more than 10 voids were observed on the coated surface.
X: More than 10 voids were observed on the coated surface.

<Surface roughness>

The surface roughness Ra was measured at three points in total at the center of the coating film and two points 10 cm above and below the center according to JIS B0601-2013 using a skid-type Surtronic Duo Surface Roughness Tester (manufactured by TAYLOR HOBSON) to calculate the average.

<Shrinkage rate>

The coating direction of the coating film was defined as an M direction, the direction perpendicular to the M direction as a T direction, and square samples of 1 cm square were cut out so that each side was aligned with the M direction and the T direction. Thereafter, the samples were placed in an air oven with an internal temperature of 170°C, and heated under atmosphere for 15 minutes. For each of the M direction (coating direction) and the T direction (direction perpendicular to the coating direction), the shrinkage to the length (l) after heat treatment with respect to the length (L) before heat treatment was expressed as a percentage.

```
Shrinkage rate (%) in each direction = (L - l)/L × 100
```

The arithmetic mean of the shrinkage rates in the M and T directions was taken as the shrinkage rate.

[Table 2]

| | | | Example 1 | Example 2 | Example 3 | Example 4 | Example 5 | Example 6 | Example 7 | Example 8 | Example 9 |
|---|---|---|---|---|---|---|---|---|---|---|---|
| Solution viscosity | | 50rpm (mPa·s) | 3100 | 3333 | 550 | 1383 | 550 | 1633 | 1267 | 717 | 1200 |
| Thixotropy (rheometer) | High shear viscosity (Pa·s) | 10000/s | 0.103 | 0.0897 | 0.0458 | 0.0424 | 0.0236 | 0.231 | 0.135 | 0.160 | 0.220 |
| | | 500/s | 0.357 | 0.33 | 0.0714 | 0.12 | 0.0417 | 0.146 | 0.352 | 0.134 | 0.104 |
| | Low shear viscosity (Pa·s) | 0.1/s | 9300 | 10600 | 7110 | 6040 | 4580 | 14,100 | 14,600 | 2,040 | 13,300 |
| | | 1/s | 1940 | 2440 | 2440 | 1260 | 1330 | 3450 | 3780 | 1150 | 2970 |
| | TI value | (1/s / 10000/s) | 18835 | 27202 | 53275 | 29717 | 56356 | 14935 | 28000 | 7188 | 13500 |
| | | (0.1/s / 10000/s) | 90291 | 118172 | 155240 | 142453 | 194068 | 61039 | 108148 | 12750 | 60455 |
| | | (0.1/s / 500/s) | 26050 | 32121 | 99580 | 50333 | 109832 | 96575 | 41477 | 15224 | 127885 |
| | | (1/s / 500/s) | 5434 | 7394 | 34174 | 10500 | 31894 | 23630 | 10739 | 8582 | 28558 |
| Coating surface appearance | | Three-grade evaluation | O | O | O | O | O | O | O | O | O |
| Surface roughness | Surface roughness tester | Ra (arithmetic mean) μm | 2.41 | 2.33 | 0.37 | 1.25 | 0.56 | 0.64 | 0.56 | 0.42 | 0.64 |
| Shrinkage rate | 170°C x 15min | % | 5.16 | 3.04 | 0.07 | 10.31 | 2.54 | 13.16 | 7.01 | 1.73 | 2.87 |

Table 2 (continued)

| | | | Example 10 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Solution viscosity | | 50rpm (mPa·s) | 1817 | 2200 | 2083 | 550 | 2117 | 1350 | 14200 | over |
| Thixotropy (rheometer) | High shear viscosity (Pa·s) | 10000/s | 0.199 | 0.0542 | 0.0637 | 0.0561 | 0.155 | 0.207 | 0.232 | 0.139 |
| | | 500/s | 0.130 | 0.176 | 0.203 | 0.0896 | 0.124 | 0.079 | 0.284 | 0.006 |
| | Low shear viscosity (Pa·s) | 0.1/s | 13,000 | 6110 | 6270 | 5100 | 28,800 | 6,220 | 12,100 | 156 |
| | | 1/s | 1660 | 2420 | 2710 | 2430 | 3650 | 2160 | 1230 | 11.1 |
| | TI value | (1/s / 10000/s) | 8342 | 44649 | 42543 | 43316 | 23548 | 10435 | 5302 | 80 |
| | | (0.1/s / 10000/s) | 65327 | 112731 | 98430 | 90909 | 185806 | 30048 | 52155 | 1122 |
| | | (0.1/s / 500/s) | 100000 | 34716 | 30887 | 56920 | 232258 | 79236 | 42606 | 25957 |
| | | (1/s / 500/s) | 12769 | 13750 | 13350 | 27121 | 29435 | 27516 | 4331 | 1847 |
| Coating surface appearance | | Three-grade evaluation | O | X | Δ | Δ | X | Δ | X | Δ |
| Surface roughness | Surface roughness tester | Ra (arithmetic mean) μm | 1.77 | 3.41 | 2.87 | 2.35 | 2.18 | 2.04 | 6.78 | 1.69 |
| Shrinkage rate | 170°C x 15 min | % | 11.23 | 50.2 | 15.64 | 36.62 | 45.13 | 19.38 | 62.31 | 48.77 |

The term "over" indicates a measurement limit or more.

It was found from Table 2 that the coating liquid compositions of Examples, in which the shrinkage rate at a predetermined temperature for a predetermined time was adjusted to 15.0% or less, each had a good appearance without voids observed on the surface of the coating film. The coating films of Examples each had a surface roughness Ra of 2.41 or less, a smaller value than most Comparative Examples.

**Claims**

1. A coating liquid composition, comprising: a filler, a solvent, a dispersant, a thickener, and a binder, wherein when the coating liquid composition is applied to a substrate to form a coating film having a thickness of 0.5 to 20 pm, the coating film has a shrinkage rate of 15.0% or less after heating at 170°C for 15 minutes.

2. The coating liquid composition according to claim 1, wherein a content of the filler is 20% by mass or more and 70% by mass or less based on the composition.

3. The coating liquid composition according to claim 1 or 2, wherein the thickener is at least one selected from poly-N-vinylcarboxylic acid amide, carboxymethylcellulose, and a salt thereof.

4. The coating liquid composition according to claim 3, wherein the thickener comprises the poly-N-vinylcarboxylic acid amide, the carboxymethylcellulose, or a salt thereof.

5. The coating liquid composition according to claim 3 or 4, wherein the poly-N-vinylcarboxylic acid amide is poly-N-vinylacetamide.

6. The coating liquid composition according to claim 5, comprising the salt of carboxymethylcellulose as a sodium salt, wherein a mass ratio of the poly-N-vinylacetamide to the sodium salt of carboxymethylcellulose (poly-N-vinylacetamide/sodium salt of carboxymethylcellulose) is 0.0001 or more in terms of solid content.

7. The coating liquid composition according to any one of claims 1 to 6, wherein the solvent is water.

8. The coating liquid composition according to any one of claims 1 to 7, wherein the binder is an emulsion selected from an acrylic emulsion and a styrene-butadiene polymer emulsion.

9. The coating liquid composition according to any one of claims 1 to 8, wherein an amount of the binder is 1 part by mass or more and 30 parts by mass or less with respect to 100 parts by mass of the filler.

10. A substrate with a coating film, comprising a coating film formed from the coating liquid composition according to any one of claims 1 to 9 and a substrate.

11. The substrate with a coating film according to claim 10, wherein the substrate is a polyolefin film.

12. The substrate with a coating film according to claim 11, wherein the polyolefin film is at least one selected from a polyethylene film and a polypropylene film.

13. The substrate with a coating film according to claim 12, wherein the substrate is a three-layer laminated film of polypropylene, polyethylene, and polypropylene.

14. A separator comprising the substrate with a coating film according to claim 13.

15. A secondary battery using the separator according to claim 14.

16. An electrode material comprising a coating film formed from the coating liquid composition according to any one of claims 1 to 9 on a surface of a polypropylene substrate.

## INTERNATIONAL SEARCH REPORT

| | International application No. |
|---|---|
| | **PCT/JP2021/033782** |

### A. CLASSIFICATION OF SUBJECT MATTER

*C09D 5/02*(2006.01)i; *C09D 109/06*(2006.01)i; *C09D 133/00*(2006.01)i; *C09D 201/00*(2006.01)i; *H01M 4/62*(2006.01)i; *C09D 7/40*(2018.01)i; *C09D 7/43*(2018.01)i; *H01M 50/409*(2021.01)i

FI: C09D201/00; H01M50/409; H01M4/62 Z; C09D7/40; C09D7/43; C09D133/00; C09D109/06; C09D5/02

According to International Patent Classification (IPC) or to both national classification and IPC

### B. FIELDS SEARCHED

Minimum documentation searched (classification system followed by classification symbols)

C09D5/02; C09D109/06; C09D133/00; C09D201/00; H01M4/62; C09D7/40; C09D7/43; H01M50/409

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-145123 A (UBE MAXELL KYOTO LTD) 10 September 2020 (2020-09-10) paragraphs [0002], [0053], [0083]-[0086] | 1-16 |
| X | JP 2013-101954 A (HITACHI MAXELL LTD) 23 May 2013 (2013-05-23) paragraphs [0002]-[0005], [0029], [0034], [0043], [0084]-[0085] | 1-16 |
| X | JP 2019-160707 A (MAXELL HOLDINGS LTD) 19 September 2019 (2019-09-19) paragraphs [0002]-[0005], [0044]-[0047], [0158]-[0159], [0167] | 1-16 |
| X | JP 2016-100135 A (TOYOTA MOTOR CORP) 30 May 2016 (2016-05-30) paragraphs [0002]-[0003], [0033], [0067], [0073] | 1-16 |
| A | WO 2020/085123 A1 (SHOWA DENKO KK) 30 April 2020 (2020-04-30) entire text, all drawings | 1-16 |

☐ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 November 2021** | **30 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/033782**

| Patent document cited in search report | | | Publication date (day/month/year) | Patent family member(s) | Publication date (day/month/year) |
|---|---|---|---|---|---|
| JP | 2020-145123 | A | 10 September 2020 | (Family: none) | |
| JP | 2013-101954 | A | 23 May 2013 | US 2011/0143183 A1 paragraphs [0002]-[0005], [0032], [0037], [0046], [0086]-[0087] WO 2010/104127 A1 KR 10-2011-0031998 A CN 102124591 A | |
| JP | 2019-160707 | A | 19 September 2019 | (Family: none) | |
| JP | 2016-100135 | A | 30 May 2016 | US 2018/0315970 A1 paragraphs [0002]-[0003], [0038], [0072], [0078] WO 2016/079581 A1 KR 10-2017-0068594 A CN 107112477 A | |
| WO | 2020/085123 | A1 | 30 April 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018070473 A

- JP 5829557 B